# EUROPEAN PATENT SPECIFICATION

(11) **EP 4 157 921 B1**
(45) Date of publication and mention of the grant of the patent: **21.10.2026**
(21) Application number: 21727583.3
(22) Date of filing: 18.05.2021
(51) Int. Cl.: C08G 77/60, C08L 83/16

(54) **CURABLE COMPOSITION, REACTION PRODUCT THEREFROM, AND ELECTRONIC ARTICLE INCLUDING THE SAME**
HÄRTBARE ZUSAMMENSETZUNG, REAKTIONSPRODUKT DARAUS UND ELEKTRONISCHER ARTIKEL DAMIT
COMPOSITION DURCISSABLE, PRODUIT DE RÉACTION OBTENU À PARTIR DE CELLE-CI, ET ARTICLE ÉLECTRONIQUE COMPRENANT CELLE-CI

(30) Priority: 28.05.2020 US 202063031159 P
(43) Date of publication of application: 05.04.2023
(73) Proprietor: 3M Innovative Properties Company, Saint Paul, Minnesota 55133-3427 (US)
(72) Inventor: HARTMANN-THOMPSON, Claire, Saint Paul, Minnesota 55133-3427 (US)
(74) Representative: Mathys & Squire
(86) International application number: PCT/IB2021/054286
(87) International publication number: WO 2021/240302

(56) References cited:
- EP-A1- 1 661 934

## Description

### TECHNICAL FIELD

The present disclosure broadly relates to curable compositions comprising carbosilanes, their cured reaction products, and electronic devices including the same.

### BACKGROUND

Fifth-generation wireless (5G) is the latest iteration of cellular technology, engineered to greatly increase the speed and responsiveness of wireless networks. With 5G, data transmitted over wireless broadband connections can travel at multigigabit speeds, with potential peak speeds as high as 20 gigabits per second (Gbps) by some estimates. The increased speed is achieved partly by using higher frequency radio waves than current cellular networks. However, higher frequency radio waves have a shorter range than the frequencies used by previous networks. So to ensure wide service, 5G networks operate on up to three frequency bands, low, medium, and high. A 5G network will be composed of networks of up to 3 different types of cell, each requiring different antennas, each type giving a different tradeoff of download speed vs. distance and service area. 5G cellphones and wireless devices will connect to the network through the highest speed antenna within range at their location.

Low-band 5G uses a similar frequency range as current 4G cellphones, 600 - 700 MHz giving download speeds a little higher than 4G: 30-250 megabits per second (Mbit/s). Low-band cell towers will have a similar range and coverage area to current 4G towers. Mid-band 5G uses microwaves of 2.5-3.7 GHz, currently allowing speeds of 100-900 Mbit/s, with each cell tower providing service up to several miles radius. High-band 5G uses frequencies of 25 - 39 GHz, near the bottom of the millimeter wave band, to achieve download speeds of 1 - 3 gigabits per second (Gbit/s), comparable to cable internet.

Many materials used in the telecommunication industry today do not perform well at 5G frequencies. Thus, the higher frequencies of 5G necessitate the identification and development of materials that can function at those frequencies and not interfere with proper functioning of electronic devices communicating at high-band wavelengths.

EP1661934A1 discloses a polycarbosilane film formed by hydrosilylation addition reaction between the SiH bonds of an aliphatic polycarbosilane and an alkenyl substituted compound. The latter group of compounds includes aliphatic poly(alkenylsilylenealkylene) compounds. SUMMARY

Advantageously, curable compositions according to the present disclosure may have low viscosity suitable for dispensing using an ink jet printer. Further, curable compositions and their cured reaction products have a low dielectric constant and dielectric loss making them suitable for use in 5G electronic devices such as, for example, cell phones, telecommunications infrastructure, and tablet computers.

In one aspect, the present disclosure provides a curable composition comprising components:
a) at least one aliphatic carbosilane having m Si-H groups, wherein m is an integer greater than or equal to 2**,** wherein the at least one aliphatic carbosilane having m Si-H groups is represented by the formula HSi(R¹)₂R²Si(R¹)₂H wherein each R¹ independently represents an alkyl group having from 1 to 4 carbon atoms; and each R² independently represents an alkylene group or a divalent carbosilane group having up to 50 carbon atoms; and
b) at least one aliphatic carbosilane having n vinyl (i.e., -CH=CH₂) groups, wherein n is an integer greater than or equal to 2, wherein m + n is at least 5; and
c) at least one hydrosilylation reaction catalyst.

Advantageously, curable compositions according to the present disclosure may have low viscosity suitable for dispensing using an ink jet printer.

In another aspect, the present disclosure provides a reaction product of components comprising:
a) at least one aliphatic carbosilane having m Si-H groups, wherein m is an integer greater than or equal to 2; and
b) at least one aliphatic carbosilane having n vinyl groups, wherein n is an integer greater than or equal to 2, wherein m + n is at least 5; and
c) at least one hydrosilation reaction catalyst.

In yet another aspect, the present disclosure provides an article comprising a substrate having an electronic component bonded thereto, wherein the electronic component is in contact with a reaction product according to the present disclosure.

As used herein:
"aliphatic" means free of any aromatic group;
"carbosilane" refers to a compound composed exclusively of Si, C, and H, and having no Si-Si bonds; and
"essentially free of" means containing less than 1 percent by weight of (e.g., less than 1 percent by weight of, less than 0.1 percent by weight of, or even less than 0.01 percent by weight of).

Features and advantages of the present disclosure will be further understood upon consideration of the detailed description as well as the appended claims.

### BRIEF DESCRIPTION OF THE DRAWINGS

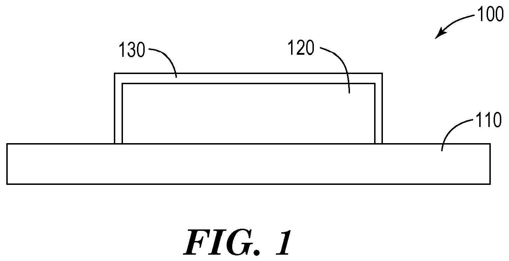

FIG. 1 is a schematic side view of an electronic article 100 according to the present disclosure.

It should be understood that numerous other modifications and embodiments can be devised by those skilled in the art, which fall within the scope and spirit of the principles of the disclosure. The figures may not be drawn to scale.

### DETAILED DESCRIPTION

Various aliphatic carbosilanes having m Si-H groups, wherein m is an integer greater than or equal to 2 are known in the art and/or are commercially available. Preferably, these carbosilanes have from 1 to 50 carbon atoms, more preferably, 4 to 18 carbon atoms, and more preferably 6 to 12 carbon atoms, although this is not a requirement. Exemplary values for m include 2, 3, 4, 5, 6, 8, and 10, although other values are also permissible. Of these, m = 2, 3, or 4 are typically preferred.

The aliphatic carbosilanes having m Si-H groups, wherein m is an integer greater than or equal to 2, are represented by the formula:

HSi(R¹)₂R²Si(R¹)₂^{H}

Each R¹ independently represents an alkyl group having from 1 to 4 carbon atoms (e.g., methyl ethyl, n-propyl, isopropyl, n-butyl, sec-butyl, isobutyl, or tert-butyl).

Each R² independently represents an alkylene group or a divalent carbosilane group having up to 50 carbon atoms. Exemplary alkylene (i.e., divalent) groups include methylene, ethylene, propylene, butylene, hexylene, octylene, decylene, hexadecylene, octadecylene, eicosylene, and tricosylene. Of these, ethylene, propylene, and butylene are often preferred. Exemplary divalent carbosilane groups include 3,3-dimethyl-3-silapentan-1,5-diyl and 2,2,4,4,-tetramethyl-2,4-disilapentan-1,5-diyl. Other divalent carbosilane groups are also permissible.

Hydrosilanes may be synthesized by hydride reduction of corresponding chloro- or alkoxysilanes using reactive metal hydrides such as lithium aluminum hydride (LiAlH₄), sodium borohydride, and diisobutylaluminum hydride (DIBAL-H), or they may be obtained from commercial sources, for example.

Still other useful aliphatic carbosilanes having m Si-H groups may include dialkyldihydridosilanes such as, for example, dimethylsilane, dipropylsilane, and dibutylsilane.

Aliphatic carbosilanes having at least two vinyl groups (i.e., n ≥ 2) are known in the chemical arts, and are also available from commercial suppliers. Preferably, these carbosilanes have from 1 to 50 carbon atoms, more preferably, 4 to 18 carbon atoms, and more preferably 6 to 12 carbon atoms, although this is not a requirement. Exemplary values for n include 2, 3, 4, 5, 6, 8, and 10, although other values are also permissible. Of these, n = 2, 3, or 4 are typically preferred.

Examples include, dimethyldivinylsilane, methyltrivinylsilane, tetravinylsilane, tetraallylsilane, and 1,4-divinyl-1,1,4,4-tetramethyl-1,4-disilabutane.

In some embodiments, the aliphatic carbosilane(s) having at least two vinyl groups are represented by the formula

Si(R¹)ₚ(R³CH=CH₂)_{q}

wherein p is 0, 1, or 2, q is 2, 3, or 4, and p + q = 4. In this embodiment, R¹ is as previously defined and R³ represents a covalent bond or an alkylene group having from 1 to 8 carbon atoms.

In order to form a cured network, not only must m and n be at least two, but the sum of m + n must be at least 5, at least 6, at least 7, at least 8, or more.

Typically, the Si-H:vinyl equivalent ratio of carbosilane component a) to the carbosilane component b) is in the range of 0.7 to 1.5, preferably 0.8 to 1.3, and more preferably 0.9 to 1.2, although this is not a requirement.

Hydrosilylation, also called catalytic hydrosilation, describes the addition of Si-H bonds across unsaturated bonds. The hydrosilylation reaction is typically catalyzed by a platinum catalyst, and generally heat is applied to effect the curing reaction. In this reaction, the Si-H adds across the double bond to form new C-H and Si-C bonds. This process in described, for example, in PCT Publication No. WO 2000/068336 (Ko et al.), and PCT Publication Nos. WO 2004/111151 (Nakamura) and WO 2006/003853 (Nakamura).

Useful hydrosilylation catalysts may include thermal catalysts and/or photocatalysts. Of these, photocatalysts may be preferred due to prolonged storage stability and ease of handling. Exemplary thermal catalysts include platinum complexes such as H₂PtCl₆ (Speier's catalyst); organometallic platinum complexes such as, for example, a coordination complex of platinum and a divinyldisloxane (Karstedt's catalyst); and chloridotris(triphenylphosphine)rhodium(I) (Wilkinson's catalyst),

Useful platinum photocatalysts are disclosed, for example, in U.S. Pat. No. 7,192,795 (Boardman et al.) and references cited therein. Certain preferred platinum photocatalysts are selected from the group consisting of Pt(II) β-diketonate complexes (such as those disclosed in U.S. Pat. No. 5,145,886 (Oxman et al.)), (η5-cyclopentadienyl)tri(σ-aliphatic)platinum complexes (such as those disclosed in U.S. Pat. No. 4,916,169 (Boardman et al.) and U.S. Pat. No. 4,510,094 (Drahnak)), and C7-20-aromatic substituted (η5-cyclopentadienyl)tri(σ-aliphatic)platinum complexes (such as those disclosed in U.S. Pat. No. 6,150,546 (Butts)). Hydrosilylation photocatalysts are activated by exposure top actinic radiation, typically ultraviolet light, for example, according to known methods.

The amount of hydrosilylation catalyst may be any effective amount. In some embodiments, the amount of hydrosilylation catalyst is in an amount of from about 0.5 to about 30 parts of platinum per one million parts of the curable composition, although greater and lesser amounts may also be used.

Advantageously, curable and cured compositions according to the present disclosure typically have low dielectric constant/dielectric loss at frequencies associated with 5G wireless communication protocols. In some embodiments, the curable and/or cured composition has a dielectric constant of less than or equal to 3 in the presence of an external alternating electric field of 10 gigahertz. In some preferred embodiments, tan delta (also known in the art as the loss tangent, or dissipation factor) is less than 0.002 at 10 GHz.

Further, curable and cured compositions according to the present disclosure may be essentially free of solvent.

Still further, curable compositions according to the present disclosure may have a low viscosity suitable for inkjet printing. For example, in some embodiments, shear viscosity (also termed absolute or dynamic viscosity) of less than or equal to 50 centipoise at a temperature between 21°C and 50°C is measured according to ASTM Test Method D7867-13 (Measurement of the Rotational Viscosity of Paints, Inks and Related Liquid Materials as a Function of Temperature).

In many embodiments, it is useful to provide curable compositions according to the present disclosure as two-part compositions that are combined in order to cure. This may provide enhanced storage stability. In such case, the curable composition comprises a Part A and a Part B. In preferred embodiments, Part A comprises the component a) and is free of the component b), and Part B comprises the component b) and the component c) and is free of the component a).

Optional additives may also be present in curable (and cured) compositions according to the present disclosure. Examples may include flow aids, low dielectric fillers (e.g., glass bubbles), and/or surfactants.

Curable and cured compositions according to the present disclosure are useful, for example, as encapsulants, sealants, and/or adhesives for electronic components used in 5G compatible equipment, for example.

The substrate may be plastic, composite, metal, ceramic and/or glass, for example. Exemplary substrates include electronic circuit boards and antennas. Examples of suitable electronic components include display components (e.g., OLED displays and LCDs), and especially electronic components intended for use in the presence of an external alternating electrical field comprising a frequency of at least one gigahertz (1 GHz), preferably in the presence of an external alternating electrical field comprising a frequency of 25 GHz.

Referring now to FIG. 1, electronic article 100 comprises substrate 110 having an electronic display component 120 bonded thereto. Electronic display component 120 is contacted by reaction product 130 according to the present disclosure which forms a seal.

### SELECT EMBODIMENTS OF THE PRESENT DISCLOSURE

In a first embodiment, the present disclosure provides a curable composition comprising components:
a) at least one aliphatic carbosilane having m Si-H groups, wherein m is an integer greater than or equal to 2, wherein the at least one aliphatic carbosilane having m Si-H groups is represented by the formula HSi(R¹)₂R²Si(R¹)₂H wherein each R¹ independently represents an alkyl group having from 1 to 4 carbon atoms; and each R² independently represents an alkylene group or a divalent carbosilane group having up to 50 carbon atoms; and
b) at least one aliphatic carbosilane having n vinyl groups, wherein n is an integer greater than or equal to 2, wherein m + n is at least 5; and
c) at least one hydrosilylation reaction catalyst.

In a second embodiment, the present disclosure provides a curable composition according to the first embodiment, wherein the curable composition has a dielectric constant of less than or equal to 3 and a tan delta of less than 0.002 in the presence of an external alternating electric field of 10 gigahertz.

In a third embodiment, the present disclosure provides a curable composition according to the first or second embodiment, wherein the curable composition has a shear viscosity of less than or equal to 50 centipoise at a temperature between 21°C and 50°C, inclusive according to ASTM Test Method D7867-13 (Measurement of the Rotational Viscosity of Paints, Inks and Related Liquid Materials as a Function of Temperature).

In a fourth embodiment, the present disclosure provides a curable composition according to any of the first to third embodiments, wherein the curable composition is essentially free of solvent.

In a fifth embodiment, the present disclosure provides a curable composition according to any of the first to fourth embodiments, wherein m is at least 3.

In a sixth embodiment, the present disclosure provides a curable composition according to any of the first to fifth embodiments, wherein n is at least 3.

In a seventh embodiment, the present disclosure provides a curable composition according to any of the first to sixth embodiments, wherein the at least one hydrosilylation reaction catalyst comprises an organometallic platinum complex.

In an eighth embodiment, the present disclosure provides a curable composition according to any of the first to seventh embodiments, wherein the at least one aliphatic carbosilane having n vinyl groups is represented by the formula:

Si(R¹)ₚ(R³CH=CH₂)_{q}

wherein:
each R¹ independently represents an alkyl group having from 1 to 4 carbon atoms;
each R³ independently represents an alkylene group having from 1 to 8 carbon atoms, or
a covalent bond;
p represents an integer from 0 to 2; and
q represents an integer of 2 to 4, wherein p + q = 4.

In a ninth embodiment, the present disclosure provides a curable composition according to any of the first to eighth embodiments, wherein the curable composition comprises a Part A and a Part B, wherein Part A comprises the component a) and is free of the component b), and Part B comprises the component b) and the component c) and is free of the component a).

In a tenth embodiment, the present disclosure provides a reaction product of components comprising:
a) at least one aliphatic carbosilane having m Si-H groups, wherein m is an integer greater than or equal to 2; and
b) at least one aliphatic carbosilane having n vinyl groups, wherein n is an integer greater than or equal to 2, wherein m + n is at least 5; and
c) at least one hydrosilation reaction catalyst.

In an eleventh embodiment, the present disclosure provides a reaction product according to the tenth embodiment, wherein the curable composition has a dielectric constant of less than or equal to 3 and a tan delta of less than 0.002 in the presence of an external alternating electric field of 10 gigahertz.

In a twelfth embodiment, the present disclosure provides a reaction product according to the tenth or eleventh embodiment, wherein the reaction product is essentially free of solvent.

In a thirteenth embodiment, the present disclosure provides a reaction product according to any of the tenth to twelfth embodiments, wherein m is at least 3.

In a fourteenth embodiment, the present disclosure provides a reaction product according to any of the tenth to thirtheenth embodiments, wherein n is at least 3.

In a fifteenth embodiment, the present disclosure provides a reaction product according to any of the tenth to fourteenth embodiments, wherein the at least one hydrosilation reaction catalyst comprises an organometallic platinum complex.

In a sixteenth embodiment, the present disclosure provides a reaction product according to any of the tenth to fifteenth embodiments, wherein the at least one aliphatic carbosilane having n vinyl groups is represented by the formula:

Si(R¹)ₚ(R³CH=CH₂)_{q}

wherein:
each R¹ independently represents an alkyl group having from 1 to 4 carbon atoms;
each R³ independently represents an alkylene group having from 1 to 8 carbon atoms, or
a covalent bond;
p represents an integer from 0 to 2; and
q represents an integer of 2 to 4, wherein p + q = 4.

In seventeeth embodiment, the present disclosure provides an electronic article comprising a substrate having an electronic component bonded thereto, wherein the electronic component is in contact with the reaction product of any of the tenth to sixteenth embodiments.

In an eighteenth embodiment, the present disclosure provides an electronic article according to the seventeenth embodiment, wherein the electronic component is intended for use in the presence of an external alternating electrical field comprising a frequency of at least one gigahertz.

In a nineteenth embodiment, the present disclosure provides an electronic article according to the seventeenth or eighteenth embodiment, wherein the electronic component is intended for use in the presence of an external alternating electrical field comprising a frequency of at least 25 GHz.

In a twentieth embodiment, the present disclosure provides an electronic article according to any of the seventeenth to nineteenth embodiments, wherein the reaction product has a dielectric constant of less than or equal to 3 and a tan delta of less than 0.002 in the presence of an external alternating electric field of 10 gigahertz.

In a twenty-first embodiment, the present disclosure provides an electronic article according to any of the seventeenth to twentieth embodiments, wherein the reaction product functions as a sealant for the electronic component.

In a twenty-second embodiment, the present disclosure provides an electronic article according to any of the seventeenth to twenty-second embodiments, wherein the electronic component comprises an electronic display component.

In a twenty-third embodiment, the present disclosure provides an electronic article according to the twenty-second embodiment, wherein the electronic display component comprises an organic light emitting diode.

In a twenty-fourth embodiment, the present disclosure provides an electronic article according to any of the seventeenth to twenty-third embodiments, wherein the reaction product functions as an adhesive to bond the electronic component to the substrate.

Objects and advantages of this disclosure are further illustrated by the following non-limiting examples, but the particular materials and amounts thereof recited in these examples, as well as other conditions and details, should not be construed to unduly limit this disclosure.

### EXAMPLES

Unless otherwise noted, all parts, percentages, ratios, etc. in the Examples and the rest of the specification are by weight.

Table 1, below, lists materials used in the examples.

**TABLE 1**

| MATERIAL | ABBREVIATION | SOURCE |
|---|---|---|
| 1,1,4,4-Tetramethyl-1,4-disilabutane | TMDSB | Gelest, Inc., Morrisville, Pennsylvania |
| Tetravinylsilane, 95% | TVS | Gelest, Inc. |
| Platinum divinyltetramethyldisiloxane complex (3 wt. % in vinyl-terminated PDMS) | --- | Gelest, Inc. |
| Platinum divinyltetramethyldisiloxane complex (2.1-2,4 wt. % in xylene) | --- | Gelest, Inc. |
| Platinum(II) acetylacetonate, 97% | Pt acac | MilliporeSigma, Saint Louis, Missouri |
| 1,7-Octadiene | --- | MilliporeSigma |
| Vinyl-terminated polydimethylsiloxane | --- | DMS V-31 from Gelest, Inc. |
| Ceramic-filled PTFE composite RO3003 | --- | Rogers Corporation, Chandler, Arizona |
| Silicone film | SFilm | high-precision silicone film made from cross-linked silicone rubber, obtained from Wacker as Elastocil Film 2030 |
| Methacryloxy-terminated polydimethylsiloxane (4-6 cps) | MTS-4 | Gelest, Inc. |
| Methacryloxy-terminated polydimethylsiloxane (8-14 cps) | MTS-8 | Gelest, Inc. |

### Preparation of Linear polycarbosilane polymer (LIN-PCS-vinyl)

1,1,4,4-Tetramethyl-1,4-disilabutane (14.8 g, 0.1 mol) was added dropwise to a solution of 1,7-octadiene (12.2g, 0.11 mol) and platinum divinyltetramethyldisiloxane complex (1 drop, 2.1-2.4% Pt in xylene) in toluene (40 mL). After an initial exotherm, the reaction mixture was stirred at room temperature for 3 days, and toluene and excess monomer was removed *in vacuo* to give the product as a viscous liquid.

### Preparation of Hyperbranched polycarbosilane (HE-PCS-vinyl)

1,1,4,4-Tetramethyl-1,4-disilabutane (8.81 g, 0.0602 mol) was added dropwise to a solution of tetravinylsilane (12.7g, 0.093 mol, 3.1 molar excess of vinyl) and platinum divinyltetramethyldisiloxane complex (1 drop, 2.1-2.4% Pt in xylene) in toluene (80 mL). After an initial exotherm, the reaction mixture was stirred at room temperature for 3 days, and toluene and excess monomer was removed *in vacuo* to give the product as a viscous liquid.

### Dielectric Spectroscopy for Liquids at 100 kHz-1MHz

Dielectric property and electrical conductivity measurements on liquids were performed with an Alpha-A High Temperature Broadband Dielectric Spectrometer modular measurement system from Novocontrol Technologies GmbH (Montabaur, Germany). A Keysight Model 16452A liquid dielectric test fixture was used to contain the liquid as a parallel plate capacitor. A ZG2 extension test interface for the Alpha-A modular measurement system was used to allow automated impedance measurements of the Keysight Model 16452A liquid dielectric test fixture through the Novocontrol software. The dielectric constants were computed from ratio of the capacitance of the test cell with liquid to the capacitance of the test cell with air. In order to measure the higher viscosity liquids with the 16452A test cell, the liquid was first heated to 50-55°C and held at this temperature for 15-30 minutes. The liquid was next injected into the liquid test cell with a syringe. After injection, the liquid was allowed to settle for up to 30 minutes, in order to minimize and avoid formation of air bubbles. After 30 minutes settling, the sample was tested.

### Split Post Dielectric Resonator Measurements for Solids at 9.5 GHz

Split-post dielectric resonator measurements were performed in accordance with the standard IEC 61189-2-721 at a frequency of 9.5 GHz. Each thin material or film was inserted between two fixed dielectric resonators. The effect of the specimen upon the resonance frequency and quality factor of the posts enables the direct computation of complex permittivity (dielectric constant and dielectric loss). The 9.5 GHz resonator operates with the TE_{01δ} mode which has only an azimuthal electric field component so that the electric field remains continuous on the dielectric interfaces. The split post dielectric resonator measures the permittivity component in the plane of the specimen. Loop coupling (critically coupled) was used in each of these dielectric resonator measurements. This 9.5 GHz Split Post Resonator measurement system was combined with Keysight VNA (Vector Network Analyzer Model PNA 8364C 10MHz-50 GHz). Computations were performed to determine the complex electric permittivity of each specimen at 9.5 GHz.

### Cylindrical Dielectric Resonator Measurements for Liquids at 2.5 GHz

A TE_{01δ} mode cylindrical dielectric resonator was used to measure the complex permittivity of dielectrics at a frequency 2.45 GHz using the method described in J. Krupka, K. Derzakowski, M.D. Janezic, and J. Baker-Jarvis, "TE01delta dielectric resonator technique for precise measurements of the complex permittivity of lossy liquids at frequencies below 1 GHz", Conference on Precision Electromagnetic Measurements Digest, pp.469-470, London, 27 June- 2 July, 2004.

### DIELECTRIC CONSTANTS OF FORMULATION COMPONENTS

The dielectric constants of linear polycarbosilane and hyperbranched polycarbosilane fluids were measured at 20°C at frequencies of 100 kHz, 1MHz, and 2.5 GHz, and compared with silicone fluids, SFilm and a commercial PTFE 5G material. Results are reported in Table 2, below.

**TABLE 2**

| MATERIAL | DIELECTRIC CONSTANT (20°C) | | | TAN δ (20°C) |
|---|---|---|---|---|
| | 100 kHz | 1 MHz | Various GHz | |
| Ceramic-filled PTFE composite | --- | --- | 3.0 (10 GHz) | 0.0013 (10 GHz) |
| LIN-PCS-vinyl | 2.30 | 2.30 | 2.29 (2.5 GHz) | 0.0018 (2.5 GHz) |
| HB-PCS-vinyl | 2.29 | 2.29 | 2.29 (2.5 GHz) | 0.0019 (2.5 GHz) |
| SFilm | --- | --- | 2.95 (9.5 GHz) | 0.02 (9.5 GHz) |
| Silicone fluid | --- | --- | 2.76 (2.5 GHz) | 0.0107 (2.5 GHz) |
| MTS-8 | --- | --- | 3.2 (2.5 GHz) | 0.083 (2.5 GHz) |
| MTS-4 | --- | --- | 3.7 (2.5 GHz) | 0.203 (2.5 GHz) |

### SHEAR VISCOSITY OF FORMULATION COMPONENTS

Rheological measurements were conducted according to ASTM Test Method D7867-13 (Measurement of the Rotational Viscosity of Paints, Inks and Related Liquid Materials as a Function of Temperature) on an ARES G2 strain controlled rheometer (TA Instruments, New Castle, DE, USA) using a recessed concentric cylinder geometry (bob of 25mm dia./32 mm length; cup w/ 27 mm dia.). The measurements were collected at 25 °C and 50 °C under nitrogen atmosphere. Measurements of shear viscosity in centipoise (cps) were obtained at a shear rate of 10 s⁻¹.

### PREPARATIVE EXAMPLES PE1-PE6

100% solids / solventless formulations (as reported in Table 3) were UV-cured by platinum-catalyzed hydrosilylation under various conditions to give hard polycarbosilane coatings. The formulations had a silane component with SiH functionality (TMDSB) and a component with vinyl functionality (TVS or HB-PCS-vinyl). HB-PCS vinyl was a hyperbranched polycarbosilane with 8.16 mmol/g terminal vinyl content, Mₙ= 3100 g/mole, M_{w}= 7100 g/mole, polydispersity 2.3, and T_{g}= -68°C. The SiH groups were in molar excess to the vinyl groups (0.1 to 4-fold).

**TABLE 3**

| EXAMPLE | TMDSB | TVS | HB-PCS-vinyl |
|---|---|---|---|
| PE1 | 70 | 30 | --- |
| PE2 | 60 | 40 | --- |
| PE3 | 50 | 50 | --- |
| PE4 | 70 | --- | 30 |
| PE5 | 60 | --- | 40 |
| PE6 | 50 | --- | 50 |

### EXAMPLES E1-E6

PE1 to PE3 were cured at room temperature using 0.3 wt.% platinum(II) acetylacetonate (Pt acac). Samples were prepared by depositing 0.25 mL of formulation onto a glass microscope slide via pipette, and curing using a Clearstone CF1000 UV LED system (395 nm, 100% intensity corresponding to 319 mW/cm² for one minute at a distance of 1 cm from the surface of the sample). Thicknesses of coatings after cure were measured to be in the range 140-150 micron via a digital micrometer. PE4 to PE6 were cured at 395 nm / 100% intensity for 5 minutes using 0.2 wt. % Pt acac.

### EXAMPLES E7-E12

PE1 to PE6 were cured by adding platinum divinyltetramethyldisiloxane complex (Karstedt's catalyst) at 0.3 wt. %.

### VISCOSITIES OF FORMULATION COMPONENTS

Viscosities of formulations were measured (Table 4) in order to demonstrate that the formulations were potentially inkjet-printable.

**TABLE 4**

| FORMULATION | SHEAR VISCOSITY, centipoise |
|---|---|
| E1 | < 20 |
| E2 | < 20 |
| E3 | < 20 |

The preceding description, given in order to enable one of ordinary skill in the art to practice the claimed disclosure, is not to be construed as limiting the scope of the disclosure, which is defined by the claims and all equivalents thereto.

## Claims

1. A curable composition comprising components:
a) at least one aliphatic carbosilane having m Si-H groups, wherein m is an integer greater than or equal to 2, wherein the at least one aliphatic carbosilane having m Si-H groups is represented by the formula
HSi(R¹)₂R²Si(R¹)₂H
wherein each R¹ independently represents an alkyl group having from 1 to 4 carbon atoms; and
each R² independently represents an alkylene group or a divalent carbosilane group having up to 50 carbon atoms;
b) at least one aliphatic carbosilane having n vinyl groups, wherein n is an integer greater than or equal to 2, wherein m + n is at least 5; and
c) at least one hydrosilylation reaction catalyst.

2. The curable composition of claim 1, wherein the curable composition has a dielectric constant of less than or equal to 3 and a tan delta of less than 0.002 in the presence of an external alternating electric field of 10 gigahertz when determined in accordance with further indications provided in the description.

3. The curable composition of claim 1, wherein the curable composition has a shear viscosity of less than or equal to 50 centipoise at a temperature between 21°C and 50°C, inclusive according to ASTM Test Method D7867-13 (Measurement of the Rotational Viscosity of Paints, Inks and Related Liquid Materials as a Function of Temperature).

4. The curable composition of claim 1, wherein m is at least 3.

5. The curable composition of claim 1, wherein n is at least 3.

6. The curable composition of claim 1, wherein the at least one hydrosilylation reaction catalyst comprises an organometallic platinum complex.

7. The curable composition of claim 1, wherein the at least one aliphatic carbosilane having n vinyl groups is represented by the formula:
Si(R¹)ₚ(R³CH=CH₂)_{q}
wherein:
each R¹ independently represents an alkyl group having from 1 to 4 carbon atoms;
each R³ independently represents an alkylene group having from 1 to 8 carbon atoms, or a covalent bond;
p represents an integer from 0 to 2; and
q represents an integer of 2 to 4, wherein p + q = 4.

8. The curable composition of claim 1, wherein the curable composition comprises a Part A and a Part B, wherein Part A comprises the component a) and is free of the component b), and Part B comprises the component b) and the component c) and is free of the component a).

9. A reaction product of components comprising:
a) at least one aliphatic carbosilane having m Si-H groups, wherein m is an integer greater than or equal to 2, wherein the at least one aliphatic carbosilane having m Si-H groups is represented by the formula
HSi(R¹)₂R²Si(R¹)₂H
wherein each R¹ independently represents an alkyl group having from 1 to 4 carbon atoms; and
each R² independently represents an alkylene group or a divalent carbosilane group having up to 50 carbon atoms;
b) at least one aliphatic carbosilane having n vinyl groups, wherein n is an integer greater than or equal to 2, wherein m + n is at least 5; and
c) at least one hydrosilation reaction catalyst.

10. The reaction product of claim 9, wherein the reaction product has a dielectric constant of less than or equal to 3 and a tan delta of less than 0.002 in the presence of an external alternating electric field of 10 gigahertz when determined in accordance with further indications provided in the description.

11. The reaction product of claim 9, wherein m is at least 3.

12. The reaction product of claim 9, wherein n is at least 3.

13. The reaction product of claim 9, wherein the at least one hydrosilation reaction catalyst comprises an organometallic platinum complex.

14. The reaction product of claim 9, wherein the at least one aliphatic carbosilane having n vinyl groups is represented by the formula:
Si(R¹)ₚ(R³CH=CH₂)_{q}
wherein:
each R¹ independently represents an alkyl group having from 1 to 4 carbon atoms;
each R³ independently represents an alkylene group having from 1 to 8 carbon atoms, or a covalent bond;
p represents an integer from 0 to 2; and
q represents an integer of 2 to 4, wherein p + q = 4.

15. An electronic article comprising a substrate having an electronic component bonded thereto, wherein the electronic component is in contact with the reaction product of claim 9.

## Patentansprüche

1. Eine härtbare Zusammensetzung, umfassend folgende Komponenten:
a) mindestens ein aliphatisches Carbosilan, das m Si-H-Gruppen aufweist, wobei m eine ganze Zahl größer als oder gleich 2 ist, wobei das mindestens eine aliphatische Carbosilan, das m Si-H-Gruppen aufweist, dargestellt wird durch die Formel
HSi(R¹)₂R²Si(R¹)₂H
wobei jedes R¹ unabhängig eine Alkylgruppe darstellt, die 1 bis 4 Kohlenstoffatome aufweist; und
jedes R² unabhängig eine Alkylengruppe oder eine zweiwertige Carbosilangruppe darstellt, die bis zu 50 Kohlenstoffatome aufweist;
b) mindestens ein aliphatisches Carbosilan, das n Vinylgruppen aufweist, wobei n eine ganze Zahl größer als oder gleich 2 ist, wobei m + n mindestens 5 ist; und
c) mindestens einen Hydrosilylierungsreaktionskatalysator.

2. Die härtbare Zusammensetzung nach Anspruch 1, wobei die härtbare Zusammensetzung eine Dielektrizitätskonstante von kleiner als oder gleich 3 und einen Tan-Delta-Wert von kleiner als 0,002 in der Gegenwart eines externen elektrischen Wechselfeldes von 10 Gigahertz aufweist, wenn dies gemäß weiteren in der Beschreibung bereitgestellten Angaben bestimmt wird.

3. Die härtbare Zusammensetzung nach Anspruch 1, wobei die härtbare Zusammensetzung eine Scherviskosität von kleiner als oder gleich 50 Centipoise bei einer Temperatur zwischen einschließlich 21 °C und 50 °C gemäß ASTM-Prüfverfahren D7867-13 (Messung der Rotationsviskosität von Farben, Tinten und verwandten flüssigen Materialien als eine Funktion der Temperatur) aufweist.

4. Die härtbare Zusammensetzung nach Anspruch 1, wobei m mindestens 3 ist.

5. Die härtbare Zusammensetzung nach Anspruch 1, wobei n mindestens 3 ist.

6. Die härtbare Zusammensetzung nach Anspruch 1, wobei der mindestens eine Hydrosilylierungsreaktionskatalysator einen metallorganischen Platinkomplex umfasst.

7. Die härtbare Zusammensetzung nach Anspruch 1, wobei das mindestens eine aliphatische Carbosilan, das n Vinylgruppen aufweist, dargestellt wird durch die Formel:
Si(R¹)ₚ(R³CH=CH₂)_{q}
wobei:
jedes R¹ unabhängig eine Alkylgruppe, die 1 bis 4 Kohlenstoffatome aufweist, darstellt;
jedes R³ unabhängig eine Alkylgruppe, die 1 bis 8 Kohlenstoffatome aufweist, oder eine kovalente Bindung darstellt;
p eine ganze Zahl von 0 bis 2 darstellt; und
q eine ganze Zahl von 2 bis 4 darstellt, wobei p + q = 4.

8. Die härtbare Zusammensetzung nach Anspruch 1, wobei die härtbare Zusammensetzung einen Teil A und einen Teil B umfasst, wobei Teil A die Komponente a) umfasst und frei von der Komponente b) ist und Teil B die Komponente b) und die Komponente c) umfasst und frei von der Komponente a) ist.

9. Ein Reaktionsprodukt von Komponenten, umfassend:
a) mindestens ein aliphatisches Carbosilan, das m Si-H-Gruppen aufweist, wobei m eine ganze Zahl größer als oder gleich 2 ist, wobei das mindestens eine aliphatische Carbosilan, das m Si-H-Gruppen aufweist, dargestellt wird durch die Formel
HSi(R¹)₂R²Si(R¹)₂H
wobei jedes R¹ unabhängig eine Alkylgruppe darstellt, die 1 bis 4 Kohlenstoffatome aufweist; und
jedes R² unabhängig eine Alkylengruppe oder eine zweiwertige Carbosilangruppe darstellt, die bis zu 50 Kohlenstoffatome aufweist;
b) mindestens ein aliphatisches Carbosilan, das n Vinylgruppen aufweist, wobei n eine ganze Zahl größer als oder gleich 2 ist, wobei m + n mindestens 5 ist; und
c) mindestens einen Hydrosilylierungsreaktionskatalysator.

10. Das Reaktionsprodukt nach Anspruch 9, wobei das Reaktionsprodukt eine Dielektrizitätskonstante von kleiner als oder gleich 3 und einen Tan-Delta-Wert von kleiner als 0,002 in der Gegenwart eines externen elektrischen Wechselfeldes von 10 Gigahertz aufweist, wenn dies gemäß weiteren in der Beschreibung bereitgestellten Angaben bestimmt wird.

11. Das Reaktionsprodukt nach Anspruch 9, wobei m mindestens 3 ist.

12. Das Reaktionsprodukt nach Anspruch 9, wobei n mindestens 3 ist.

13. Das Reaktionsprodukt nach Anspruch 9, wobei der mindestens eine Hydrosilylierungsreaktionskatalysator einen metallorganischen Platinkomplex umfasst.

14. Das Reaktionsprodukt nach Anspruch 9, wobei das mindestens eine aliphatische Carbosilan, das n Vinylgruppen aufweist, dargestellt wird durch die Formel:
Si(R¹)ₚ(R³CH=CH₂)_{q}
wobei:
jedes R¹ unabhängig eine Alkylgruppe, die 1 bis 4 Kohlenstoffatome aufweist, darstellt;
jedes R³ unabhängig eine Alkylgruppe, die 1 bis 8 Kohlenstoffatome aufweist, oder eine kovalente Bindung darstellt;
p eine ganze Zahl von 0 bis 2 darstellt; und
q eine ganze Zahl von 2 bis 4 darstellt, wobei p + q = 4.

15. Ein elektronischer Gegenstand, umfassend ein Substrat, das eine daran gebundene elektronische Komponente aufweist, wobei die elektronische Komponente mit dem Reaktionsprodukt nach Anspruch 9 in Kontakt steht.

## Revendications

1. Composition durcissable comprenant des composants :
a) au moins un carbosilane aliphatique ayant m groupes Si-H, dans laquelle m est un nombre entier supérieur ou égal à 2, dans laquelle l'au moins un carbosilane aliphatique ayant m groupes Si-H est représenté par la formule
HSi(R¹)₂R²Si(R¹)₂H
dans laquelle chaque R¹ représente indépendamment un groupe alkyle ayant de 1 à 4 atomes de carbone ; et
chaque R² représente indépendamment un groupe alkylène ou un groupe carbosilane divalent ayant jusqu'à 50 atomes de carbone ;
b) au moins un carbosilane aliphatique ayant n groupes vinyle, dans laquelle n est un nombre entier supérieur ou égal à 2, dans laquelle m + n vaut au moins 5 ; et
c) au moins un catalyseur de réaction d'hydrosilylation.

2. Composition durcissable selon la revendication 1, dans laquelle la composition durcissable a une constante diélectrique inférieure ou égale à 3 et une tan delta inférieure à 0,002 en présence d'un champ électrique alternatif externe de 10 gigahertz lorsqu'on détermine conformément à des indications supplémentaires fournies dans la description.

3. Composition durcissable selon la revendication 1, dans laquelle la composition durcissable a une viscosité sous cisaillement inférieure ou égale à 50 centipoises à une température comprise entre 21 °C et 50 °C, inclus, selon le procédé de test ASTM D7867-13 (mesure de la viscosité rotationnelle de peintures, encres et matériaux liquides apparentés en fonction de la température).

4. Composition durcissable selon la revendication 1, dans laquelle m vaut au moins 3.

5. Composition durcissable selon la revendication 1, dans laquelle n vaut au moins 3.

6. Composition durcissable selon la revendication 1, dans laquelle l'au moins un catalyseur de réaction d'hydrosilylation comprend un complexe de platine organométallique.

7. Composition durcissable selon la revendication 1, dans laquelle l'au moins un carbosilane aliphatique ayant n groupes vinyle est représenté par la formule :
Si(R¹)ₚ(R³CH=CH₂)_{q}
dans laquelle :
chaque R¹ représente indépendamment un groupe alkyle ayant de 1 à 4 atomes de carbone ;
chaque R³ représente indépendamment un groupe alkylène ayant de 1 à 8 atomes de carbone, ou une liaison covalente ;
p représente un nombre entier allant de 0 à 2 ; et
q représente un nombre entier de 2 à 4, dans laquelle p + q = 4.

8. Composition durcissable selon la revendication 1, dans laquelle la composition durcissable comprend une Partie A et une Partie B, dans laquelle la Partie A comprend le composant a) et est exempte du composant b), et la Partie B comprend le composant b) et le composant c) et est exempte du composant a).

9. Produit de réaction de composants comprenant :
a) au moins un carbosilane aliphatique ayant m groupes Si-H, dans lequel m est un nombre entier supérieur ou égal à 2, dans lequel l'au moins un carbosilane aliphatique ayant m groupes Si-H est représenté par la formule
HSi(R¹)₂R²Si(R¹)₂H
dans laquelle chaque R¹ représente indépendamment un groupe alkyle ayant de 1 à 4 atomes de carbone ; et
chaque R² représente indépendamment un groupe alkylène ou un groupe carbosilane divalent ayant jusqu'à 50 atomes de carbone ;
b) au moins un carbosilane aliphatique ayant n groupes vinyle, dans lequel n est un nombre entier supérieur ou égal à 2, dans lequel m + n vaut au moins 5 ; et
c) au moins un catalyseur de réaction d'hydrosilation.

10. Produit de réaction selon la revendication 9, dans lequel le produit de réaction a une constante diélectrique inférieure ou égale à 3 et une tan delta inférieure à 0,002 en présence d'un champ électrique alternatif externe de 10 gigahertz lorsqu'on détermine conformément à des indications supplémentaires fournies dans la description.

11. Produit de réaction selon la revendication 9, dans lequel m vaut au moins 3.

12. Produit de réaction selon la revendication 9, dans lequel n vaut au moins 3.

13. Produit de réaction selon la revendication 9, dans lequel l'au moins un catalyseur de réaction d'hydrosilation comprend un complexe de platine organométallique.

14. Produit de réaction selon la revendication 9, dans lequel l'au moins un carbosilane aliphatique ayant n groupes vinyle est représenté par la formule :
Si(R¹)ₚ(R³CH=CH₂)_{q}
dans laquelle :
chaque R¹ représente indépendamment un groupe alkyle ayant de 1 à 4 atomes de carbone ;
chaque R³ représente indépendamment un groupe alkylène ayant de 1 à 8 atomes de carbone, ou une liaison covalente ;
p représente un nombre entier allant de 0 à 2 ; et
q représente un nombre entier de 2 à 4, dans lequel p + q = 4.

15. Article électronique comprenant un substrat ayant un composant électronique lié à celui-ci, dans lequel le composant électronique est en contact avec le produit de réaction selon la revendication 9.
